# EUROPEAN PATENT APPLICATION

(11) **EP 4 552 822 A1**
(43) Date of publication of application: **14.05.2025**
(21) Application number: 23208891.4
(22) Date of filing: 09.11.2023
(51) Int. Cl.: B29C 48/05, B29C 48/25, B29C 48/345, B29C 48/375, B29C 64/209, B29C 64/321

(54) **A SYSTEM AND METHOD FOR EXTRUSION PRINTING**

(71) Applicant: VITO NV, 2400 Mol (BE)
(72) Inventor: MICHIELSEN, Bart, 2400 Mol (BE); LEFEVERE, Jasper, 2400 Mol (BE); BREUGELMANS, Jef, 2400 Mol (BE)
(74) Representative: V.O.

(57) **Abstract**

An extrusion printing system configured to extrude a build material, wherein the system includes: a plurality of gear pump units arranged consecutively, wherein each gear pump unit has an inflow portion for receiving build material and an outflow portion for transferring build material towards at least one nozzle, wherein each gear pump unit comprises a first gear element having a plurality of first lobes disposed circumferentially around a first central axis, and a second gear element having a plurality of second lobes disposed circumferentially around a second central axis, wherein the first lobes are configured to cooperate with the second lobes to facilitate a pumping action of the build material; a feed channel in fluid communication with the inflow portion of each of the plurality of gear pump units, wherein the feed channel is configured to feed build material to each of the plurality of gear pump units; and wherein, during operation, the gear pump units are configured to induce movement to the build material within the feed channel.

## Description

### FIELD OF THE INVENTION

The invention relates to an extrusion printing system configured to extrude a build material, wherein the system includes: a plurality of gear pump units arranged consecutively. Furthermore, the invention relates to a method for extrusion printing using a system configured to extrude a build material employing a plurality of gear pump units arranged consecutively. Also, the invention relates to the use of the extrusion printing system for manufacturing 3D printed structures.

### BACKGROUND TO THE INVENTION

Extrusion printing, particularly when dealing with high viscosity materials like paste materials, may be inherently challenging. One of the most pivotal aspects of the printing process lies in the delivery and control of the build material to achieve precise, high-quality outputs. The consistency and flow rate of the build material, especially in its paste form, can be critical to ensuring that the material is accurately deposited during the printing process. Given that these materials inherently possess a high degree of viscosity, controlling their flow may become a significant hurdle.

Traditional systems usually require an extensive amount of pressure in the feed or supply system to push the paste material towards and through the extrusion nozzle. This increased pressure not only leads to increased wear and tear on the equipment but also results in higher energy consumption. Moreover, consistently maintaining such high pressures can be technically challenging and may lead to unpredictable variations in the extrusion process.

Another drawback of the current solutions lies in their inability to efficiently control the material's viscosity throughout the extrusion process. This results in an inconsistent flow of the material, leading to potential defects, irregularities, or imperfections in the final printed product. Additionally, the inconsistency can make it difficult for the printer to handle intricate designs or fine details. This can have drastic effects on the output when multiple nozzles are used for parallel printing.

In light of these challenges, there is a pressing need for an improved solution in the domain of extrusion printing. A system that can effectively handle viscous build materials, and that can consistently produce high-quality output across a large volume of structures would represent a significant advancement in the field and is thus highly desired.

### SUMMARY OF THE INVENTION

It is an object of the invention to provide for a method and a system that obviates at least one of the above mentioned drawbacks.

Additionally or alternatively, it is an object of the invention to provide for an improved operation of an extrusion printing system with multiple gear pump units.

Additionally or alternatively, it is an object of the invention to provide a more energy-efficient mechanism for extruding high-viscosity materials using an extrusion printing system with multiple gear pump units.

Additionally or alternatively, it is an object of the invention to provide an extrusion printing system with multiple gear pump units that offers enhanced longevity and/or reduced wear.

Additionally or alternatively, it is an object of the invention to provide a solution that allows for more precise control over the build material's flow rate through nozzles of an extrusion printing system with multiple gear pump units.

Thereto, the invention provides for an extrusion printing system configured to extrude a build material, wherein the system includes: a plurality of gear pump units arranged consecutively, wherein each gear pump unit has an inflow portion for receiving build material and an outflow portion for transferring build material towards at least one nozzle, wherein each gear pump unit comprises a first gear element having a plurality of first lobes disposed circumferentially around a first central axis, and a second gear element having a plurality of second lobes disposed circumferentially around a second central axis, wherein the first lobes are configured to cooperate with the second lobes to facilitate a pumping action of the build material (cf. transport build material from the inflow portion to the outflow portion); a feed channel in fluid communication with the inflow portion of each of the plurality of gear pump units, wherein the feed channel is configured to feed build material to each of the plurality of gear pump units; and wherein, during operation, the gear pump units are configured to induce movement to the build material within the feed channel.

The system integrates a series of gear pump units arranged in a consecutive manner. Each of these gear pump units is equipped with both an inflow portion, responsible for the intake of the build material, and an outflow portion that channels the build material from the gear pump unit towards a designated nozzle. The collaborative interaction of a first gear element that houses multiple first lobes oriented around a first central axis, and a second gear element with an arrangement of second lobes around a secondary axis forms the basis for the pumping action that propels the build material. In order to ensure a supply of build material, an incorporated feed channel is provided in fluid communication with the inflow section of each gear pump unit. During system operation, the gear pump units play an important role by instigating movement in the build material inside the feed channel. Advantageously, this movement can result in an effective reduction of the viscosity of the build material.

The extrusion printing system provides for a precise and controlled supply of build material to the nozzles of build material by incorporating a series of consecutively arranged gear pump units. These units, each featuring a first and second gear element with respective lobes, work in tandem to generate a pumping action for the build material. The gear pump units may be configured to actively promote movement in the build material within the feed channel.

As the lobes of the gear pump rotate, they create pockets or voids between the lobes. These pockets generate a suction effect, drawing build material in. As the lobes continue their rotation, the material in these pockets is displaced or pushed out. This continuous suction and displacement action induced by rotation of the gear elements promotes transfer of build material from the feed channel towards the exit nozzles. However, the first and second gear pump units may be configured to provide more than only a suction and displacement effect.

In some cases the rotation of the gear elements can be continuous and/or regular. However, in some cases the movement of the gear pump's lobes may not be continuous, as it is subject to start and stop actions. Additionally, the speed of rotation can vary. For instance, one could modify the speed to print the bottom layer more slowly. This variability in speed allows for precise control over the deposition of the build material, ensuring optimal layer formation and quality, especially for critical layers like the first layer that may require a different treatment than subsequent layers. Adjusting the rotation speed provides flexibility in tailoring the printing process to specific requirements or desired outcomes.

The gear pump units may be configured and/or may be provided with operational attributes that allow it to manipulate the build material beyond just transferring it. In some examples, the gear pump units are configured to provide for an agitating effect. The rotation of the gear pump lobes may induce agitation of the build material in the feed channel. In some examples, the rotation of the gear pump lobes may create a stirring effect within the feed channel. The lobes may be arranged in such a way that the rotation of the lobes disturbs and agitates the build material, ensuring it remains in movement. This may further ensure that the build material remains homogenized, preventing stagnation or settling. In some examples, the build material may have a relatively high viscosity. The act of agitating or stirring, achieved by means of the first and second gear pump units, helps to improve the fluid dynamics of the build material.

Additionally or alternatively, beyond agitating or stirring, the rotation of the lobes can create a churning action. The vigorous rotation and interaction of the lobes can lead to a more intense mixing action of the build material in the feed channel.

Additionally or alternatively, in some examples, the rotation of the gear pump units may create a vortex or a swirling motion within the build material in the feed channel. This vortex action can further enhance the fluid flow (cf. lower viscosity), which can be highly beneficial for build materials with a relatively high viscosity and/or with particles with different sizes, densities, etc.

Additionally or alternatively, the gear pump units may be configured to generate vibrations and/or pulses that can improve mixing or movement of build material within the feed channel.

In various examples, during its operation, the gear pump units are configured to induce or facilitate movement, whether it be rotation, oscillation, or some other motion, to the build material being inside this feed channel.

Optionally, during operation, the gear pump units are configured to apply shear forces to the build material in the feed channel.

The functionality of the first and second gear elements extends beyond mere achieving a pumping action. Specifically, during its operational phase, the gear pump units are adeptly configured to exert shear forces upon the build material present in the feed channel. Advantageously, this application of shear force is integral to achieving desired material properties during operation. The viscosity of the build material can be reduced in an effective way.

The gear pump units, during operation, apply shear forces to the build material within the feed channel so as to introduce shear forces that can effectively reduce viscosity of the build material when it is in motion. The build material (e.g. paste material) may be naturally viscous when stationary. The application of shear forces can help to transform it into a more fluid state, facilitating easier and more efficient extrusion.

Gear pump units may have interlocking gear elements, each having lobes that mesh together as they rotate. When these gears rotate, the spaces (or pockets) between the lobes draw in the build material and then compress it, forcing it out toward the nozzle. The lobes may be designed in such a way that they induce active movement (e.g. mixing effect) of the build material within the feed channel.

Most paste materials, like those used in extrusion printing, exhibit a non-Newtonian behavior. This means their viscosity (or internal resistance to flow) changes under different conditions. When shear force is applied to these materials, it causes the internal structures to align or slide past one another, reducing internal friction. This alignment results in a phenomenon called 'shear thinning' where the material becomes less viscous and more fluid-like under shear.

When the viscosity of the build material is reduced, it flows more readily and smoothly, making it easier for the gear pump units to move it through the system. This consistent flow rate is especially critical in extrusion printing where the uniformity of the material extruded can significantly impact the quality of the printed object.

Furthermore, by adjusting the viscosity through shear forces, the system may be able to handle a wider variety of build materials with different inherent viscosities, significantly increasing the system's versatility in an advantageous way.

The application of shear forces doesn't just facilitate easier flow; it also ensures efficient extrusion. In systems without such shear force application, the naturally high viscosity of certain paste materials may necessitate the use of higher pressures or temperatures to achieve extrusion. These conditions can compromise the integrity of the material or the efficiency of the system. With shear forces, the system can operate under milder conditions while achieving the same, if not better, extrusion results.

Therefore, the shear forces applied to the build material in the feed channel, introduced by the operation of the gear pump units, can play an important role in modulating the build material's viscosity, ensuring its readiness for efficient extrusion, and enhancing the overall versatility and capability of the extrusion printing system.

Optionally, the gear pump units are configured to apply the shear forces by means of movement of at least one of the first lobes or second lobes.

The gear pump units of the system utilize their inherent lobe structures to apply the aforementioned shear forces. The forces emerge from the active movement of the first set of lobes and/or the second set.

By utilizing the lobes of the gear pump units for this task, a direct and efficient mechanism for imparting shear is achieved, ensuring that the desired fluidity of the build material is attained. Shear forces in the build material in the feed channel arise when adjacent layers of the fluid move relative to each other. These forces can alter the viscosity of certain materials, making them more fluid. This phenomenon is especially true for non-Newtonian fluids like many paste materials, where applying shear can reduce their viscosity.

As the lobes rotate, the lobes closest to the feed channel can the induce shear forces. This can for example by achieved by the close proximity of the lobes to the feed channel. The design and arrangement of the lobes on the gear elements can be thus very important for effective shear generation. The continuous rotation of the lobes may ensure application of shear, which can be of significant importance for maintaining the desired fluidity throughout the operation.

For materials that exhibit shear thinning properties (e.g. non-Newtonian fluids), the application of shear forces leads to a reduction in viscosity. This reduction is beneficial, especially for paste materials used in extrusion printing systems, as it ensures that the material becomes more fluid and, consequently, easier to extrude through the nozzle.

It will be appreciated that the shear forces can be generated by one or more parameters related to the movement of the lobes.

Optionally, at least one of the first lobes or second lobes are configured interact with build material in the feed channel.

The first and/or the second set of lobes is arranged to directly interact with the build material present in the feed channel. This purposeful interaction further facilitates the process of pumping and manipulating the build material properties.

This direct interaction may ensure a consistent and direct application of forces, allowing for better control over the material's properties and flow. It helps in achieving a more uniform reduction in viscosity, which can be important for the consistent extrusion of build materials.

In an extrusion printing system with gear pump units, the lobes serve as elements that dictate the flow and movement of the build material. Each gear pump unit contains a first and second gear element, each equipped with several lobes. These lobes are typically designed in a manner where they mesh and unmesh with one another, thus creating spaces that fill with build material and then extrude it out in a cyclical pumping action. In some examples, at least one of these first or second lobes is specifically designed to interact with the build material present in the feed channel. This means that as the lobes rotate and undergo their pumping action, they don't just stay within the confines of the gear pump unit. Instead, they may reach out into the feed channel, coming into direct contact with the build material.

By allowing the lobes to engage directly with the build material in the feed channel, there's an immediate application of shear and other forces directly to the bulk of the material. This is different from a situation where the material simply gets drawn into the gear pump unit and then experiences these forces. By engaging directly, the forces applied by the lobes can affect a larger volume of material more rapidly and uniformly.

When the lobes engage directly with the build material in the feed channel, it leads to a notable improvement in the consistency of the material, making the paste more fluid-like. This enhanced fluidity facilitates better feeding of the paste into the gear pump unit. As a result, with this improved feed mechanism, there is an opportunity to achieve faster printing speeds. This speed enhancement is realized through the capability to rotate the gears more quickly than in scenarios where the gears do not engage directly in the channel. By optimizing the interaction between the lobes and the build material, the system is better poised to achieve efficient and high-speed printing outcomes.

The build material may be characteristically viscous when stationary but can become more fluid when in motion. The direct interaction of the lobes with the material in the feed channel aids in initiating this transition more efficiently. The direct contact ensures that the build material undergoes shear thinning, a phenomenon where certain materials decrease in viscosity when subjected to shear stress. As the lobes rotate and interact with the material, they apply this shear stress, which in turn causes the material to become more fluid-like, promoting easier and more consistent extrusion.

With a more uniform and rapid reduction in viscosity, the extrusion process can benefit in several ways. Firstly, there's a consistent flow rate, ensuring that the printed structures have uniform properties. Secondly, by ensuring the build material is always in its optimal viscosity state when it reaches the nozzle, issues like clogging or uneven deposition are minimized.

Thus, the direct interaction of the lobes with the build material in the feed channel can enable a more efficient and uniform processing of the build material. This interaction optimizes the material's properties right before it enters the extrusion nozzle, which can lead to better printing results.

It will be appreciated that the interaction of lobes with the build material within the feed channel can be in the form of direct contact, momentary engagement, or any other suitable form of interaction enhancing the shear action.

Optionally, during the rotation of the first and second gear elements, at least a portion of one or more lobes of the gear pump units extends into the feed channel.

In some examples, during the synchronous rotation of both the first and second gear elements, a segment of one or multiple lobes from the gear pump units deliberately protrudes into the feed channel.

By having these lobes extend into the feed channel, there is increased interaction between the lobes and the build material. This design imparts the advantage of ensuring that the build material undergoes the necessary shear forces more consistently and effectively.

The term "extend into" signifies that during the gear elements' rotation, a portion of the lobes physically enters or protrudes into the space of the feed channel. Hence, these lobes can penetrate the volume of the feed channel, coming into direct contact with the build material therein, inducing forces that effectively can result in a reduction of the viscosity of the build material within the feed channel.

This direct interaction can be important for a number of reasons. Firstly, it can ensure a more thorough mixing and movement of the build material in the feed channel. When the lobes extend into the feed channel, they act as dynamic mixers, agitating the build material and ensuring that it remains in motion. This can be important given the inherent viscous nature of the build material. If left undisturbed or if there's inadequate mixing, the build material may exhibit a too high viscosity, an inconsistent viscosity and/or even form undesirable aggregates or clumps.

The design may allow for a larger number of nozzles to be aligned in a row, given that the paste can flow further and more uniformly. This arrangement ensures not only an efficient delivery of the build material to each nozzle but also that the extrusion process maintains a level of consistency across all nozzles.

The interaction of the lobes with the build material is not just a simple mechanical mix. As these lobes rotate and move within the feed channel, they induce shear forces onto the build material. Shear forces refer to the forces that cause layers of the material to slide against each other. In the context of a viscous material like the build material used in extrusion printing, shear forces can alter its rheological properties, making it more amenable to extrusion.

By ensuring that the lobes consistently extend into the feed channel during their rotation, the system can achieve a more uniform application of shear forces to the build material. This can be important for several reasons. Uniformity in printing can be improved. A consistent shear force can ensure that the build material maintains a predictable viscosity as it's being extruded, leading to uniform layer deposition and better overall print quality. Additionally or alternatively, material stagnation can be better prevented. The constant interaction and shearing action prevent the build material from settling or stagnating in the feed channel. Additionally or alternatively, for build materials with particles or fillers, it can be better ensured that said particles or fillers can remain uniformly dispersed. It can thus result in consistent material quality in the printed product. Uniform distribution of these particles or fillers throughout the material not only maintains the structural integrity of the printed object but also ensures that its properties, such as strength, flexibility, or conductivity, remain constant throughout. Inconsistent material properties can compromise the functionality, aesthetics, or durability of the final product, highlighting the significance of maintaining a consistent material quality during the printing process. Additionally or alternatively, a more optimized material flow can be obtained. The continuous shearing can ensure that the build material is always in an optimal state for extrusion, reducing the chances of inconsistent flow rates.

It will be appreciated that the extension could be constant, intermittent, or variable based on the requirements of the pumping action.

Optionally, the gear pump units are arranged such that troughs between individual lobes do not enter the feed channel throughout the rotation of the first and second gear elements during the pumping action.

In some examples, while the lobes are constructed to extend into the feed channel, the system ensures that the troughs - or the recesses between individual lobes - remain outside the feed channel. This is consistently maintained throughout the entire rotation cycle of the first and second gear elements, safeguarding the desired pumping action.

The extrusion printing system may be further improved by ensuring that the troughs between individual lobes do not enter the feed channel during the gear elements' rotation. In this way, the shearing forces can be induced in an efficient way.

Optionally, lobes of the gear pump units are used for achieving shear thinning in the feed channel.

Advantageously, the gear pump units can be configured to effectively use their lobes to induce shear thinning within the feed channel. This function is important to optimize the viscosity and flow characteristics of the build material.

Shear thinning is a property where the viscosity of the material decreases as shear rate increases. This technical advantage ensures that as the build material is processed, it becomes more conducive for extrusion, enhancing the overall efficiency and quality of the printing process.

The lobes of the gear pump units may be specifically employed for achieving active shear thinning within the feed channel. It will be appreciated that this could be achieved by leveraging the shape, movement, or orientation of the lobes to reduce viscosity as the material moves.

Optionally, the feed channel is arranged transverse to an inflow direction of the gear pump units.

In some examples, the feed channel is purposefully oriented transversely (cf. cross-wise) in relation to the inflow direction of the gear pump units, resulting in improved fluid dynamics. This orientation ensures a more uniform distribution of shear forces across the build material. By configuring the feed channel in this manner, the system promotes more effective shear thinning and better control over the build material's properties. However, it will be appreciated that various other configurations are envisaged. For example, alternatively, the feed channel can be oriented at various angles or configurations relative to the inflow direction to increase the flow and/or shear effects.

Optionally, an extent to which the lobes extend into the feed channel is at least 2 percent of a total length of an individual lobe measured from its base to its tip, preferably at least 20 percent, more preferably at least 50 percent.

In some examples, the system is configured such that the lobes extend a minimum of 2 percent of their complete length, calculated from base to tip. In some cases, the pumping action can be further increased by increasing this extension of lobes, e.g. more than 30 percent, even in some cases more than 50 percent. This significant extension can ensure maximum interaction with the build material, offering the advantage of a more consistent and effective application of shear forces, leading to optimal shear thinning.

Optionally, a part of a surface of each lobe that extends into the feed channel during operation is processed or treated with specific texturing or coating techniques so as to improve its shear thinning properties during operation.

In some examples, the effectiveness and/or efficiency of the system can be improved by performing processing of the exposed surfaces of the lobes, particularly the segments that intrude into the feed channel during operation. This may include treatments like texturing or coating (e.g. adapted roughness), specifically formulated to augment their shear thinning properties. This can be a minimally invasive improvement that can have significant effects on the performance of the system.

These treatments offer the advantage of amplifying the shear thinning properties during operation. By modifying the lobe's surface, there's improved interaction with the build material, ensuring that the desired material properties are achieved with higher efficiency.

It will be appreciated that any other surface enhancement techniques aiming to amplify the shear thinning properties during operation can be employed.

Optionally, an extent to which the lobes extend into the feed channel is adjustable by change or replacement of the lobes.

The extent to which the lobes infiltrate the feed channel may not be static or fixed in the system. It can be modulated through either adjustments to the existing lobes or complete lobe replacements.

The system can provide adaptability by allowing adjustments to the extent the lobes extend into the feed channel. This can be achieved either by modifying the lobes or replacing them altogether. This adjustability provides the technical benefit of tailoring the system to handle different build materials or desired extrusion properties, ensuring that the system remains versatile across various applications.

Optionally, the extent to which the lobes extend into the feed channel is selected in a range of 2 percent to 80 percent of the length of a lobe at least partially based one or more values indicative of viscosity and/or flow rate of the build material in the feed channel.

The choice of how much the lobes extend into the feed channel is influenced by certain parameters. These include indicators like the viscosity and flow rate of the build material within the feed channel.

The extent to which the lobes penetrate the feed channel can be calibrated based on values indicative of the viscosity and/or flow rate of the build material. This feature allows for a dynamic adjustment and fine-tuning of the system in real-time or pre-operation, ensuring that the shear forces applied are optimal for the specific build material being used, enhancing the quality and consistency of the extrusion process.

Optionally, each of the first and second lobes features an ellipsoid design, wherein an ellipsoid portion of each lobe is complemented with a circular portion defining a valley between adjacent lobes.

From a design perspective, each lobe, both first and second, showcases an ellipsoid design complemented with a circular section.

In some examples, the first lobes and the second lobes are structured and arranged such that they do not come into direct contact with each other and keep a minimum gap distance therebetween at any point throughout the rotation of the first and second gear elements during the pumping action.

The unique geometry with ellipsoid and circular portions defines the shape of protrusions and valleys that exist between adjacent lobes. Such design enables to provide for a minimum gap distance between the lobes in an improved manner. More particularly, a minimum gap distance can be diligently maintained between these lobes throughout the pumping action.

Optionally, the first and second gear elements comprise at least 6 lobes, preferably at least 7 lobes, even more preferably at least 10 lobes.

The first and second gear elements of the system are not limited in terms of lobe count. In some examples, the first and second gear elements comprise each at minimum 6 lobes, with preferences for increased counts such as 7 or even 10. The inclusion of a greater number of lobes ensures more frequent interactions with the build material, leading to a consistent and effective application of shear forces. This can result in a more controlled and precise extrusion process.

Optionally, the second central axis is parallel to the first central axis.

Optionally, replaceable wear plates are provided at walls within the gear pump.

According to an aspect, the invention provides for a method for extrusion printing using a system configured to extrude a build material, the method comprising the steps of: providing a plurality of gear pump units arranged consecutively, wherein each gear pump unit has an inflow portion for receiving build material and an outflow portion for transferring build material towards at least one nozzle, wherein each gear pump unit comprises a first gear element having a plurality of first lobes disposed circumferentially around a first central axis, and a second gear element having a plurality of second lobes disposed circumferentially around a second central axis, wherein the first lobes are configured to cooperate with the second lobes to facilitate a pumping action of the build material; providing a feed channel in fluid communication with the inflow portion of each of the plurality of gear pump units, wherein the feed channel is configured to feed build material to each of the plurality of gear pump units; and extruding the build material through the at least one nozzle connected to each gear pump unit; and wherein the gear pump units are employed to induce movement to the build material within the feed channel.

The gear pump units have the added function of instigating movement in the build material within the feed channel, improving its properties for extrusion.

By employing these gear pump units to induce movement in the build material within the feed channel, the method can effectively guarantee that the material remains fluid, ensuring consistent print quality and efficiency.

By subjecting the build material to movement (and thus forces), the system can effectively reduce its viscosity, especially important for paste materials that exhibit a viscosity change under influence of movement/forces (e.g. shear force). Such a change makes the material more fluid and manageable during the extrusion process, optimizing print quality and consistency.

According to an aspect, the invention provides for a gear pump unit for facilitating the movement of build material in an extrusion printing system, the gear pump unit comprising: an inflow portion configured to receive build material; an outflow portion configured to transfer build material; a first gear element having a plurality of first lobes disposed circumferentially around a first central axis; a second gear element having a plurality of second lobes disposed circumferentially around a second central axis; wherein the first lobes are configured to cooperate with the second lobes to facilitate a pumping action of the build material; wherein the gear pump unit is arranged such that during its operation, it induces movement to the build material within a feed channel in fluid communication with the inflow portion.

According to an aspect, the invention provides for a device comprising a system according to the disclosure.

According to an aspect, the invention provides for an extrusion system configured to process a material, wherein the system includes: a series of pump units arranged in sequence, wherein each pump unit has an input for receiving material and an output for directing material towards a discharge point, and wherein each pump unit comprises a first pumping element interacting with a second pumping element to enable a material movement action; a supply channel communicating with the input of each of the series of pump units, designed to provide material to each of the series of pump units; wherein, during operation, the pump units are configured to induce movement to the material within the supply channel.

According to an aspect, the invention provides for a method for extrusion printing using a system configured to extrude a build material, the method comprising: providing a system with a series of pump units arranged in sequence, wherein each pump unit has an input for receiving material and an output for directing material towards a discharge point; equipping each pump unit with a first pumping element that interacts with a second pumping element to enable a material movement action; connecting a supply channel to the input of each of the series of pump units to provide build material to each unit; operating the pump units to induce movement of the build material within the supply channel and directing it towards the desired discharge point for printing.

It will be appreciated that any of the aspects, features and options described in view of the system apply equally to the method and the described gear pump units, device(s) and use. It will also be clear that any one or more of the above aspects, features and options can be combined.

### BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:
Fig. 1 shows a schematic diagram of an embodiment of an extrusion printing system;
Fig. 2a, 2b show a schematic diagram of respectively a perspective view and a cross-sectional view of an embodiment of an extrusion printing system;
Fig. 3 shows a schematic diagram of a cross-sectional view of a part of an embodiment of an extrusion printing system;
Fig. 4 shows a schematic diagram of a cross-sectional view of exemplary lobes of gear pump units;
Fig. 5 shows a schematic diagram of a cross-sectional view of exemplary gear element;
Fig. 6 shows a schematic diagram of a cross-sectional perspective view of an embodiment of an extrusion printing system; and
Fig. 7 shows a schematic diagram of a cross-sectional view of an embodiment of an extrusion printing system.

### DETAILED DESCRIPTION

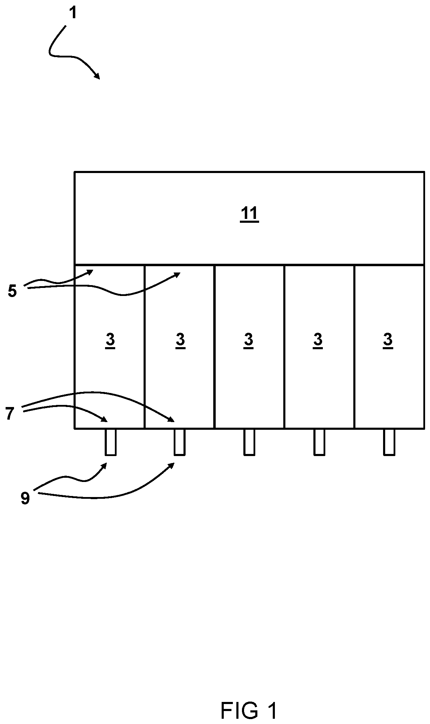

Fig. 1 shows a schematic diagram of an embodiment of an extrusion printing system 1 that is configured to extrude a build material, such as for example a viscous build material. In some examples, the viscous build material is a paste material. The extrusion printing system 1 includes a plurality of gear pump units 3 arranged consecutively. Each gear pump unit 3 has an inflow portion 5 for receiving build material and an outflow portion 7 for transferring build material towards at least one extrusion nozzle 9. Furthermore, each gear pump unit 3 comprises a first gear element (not shown in fig. 1) having a plurality of first lobes disposed circumferentially around a first central axis, and a second gear element (not shown in fig. 1) having a plurality of second lobes disposed circumferentially around a second central axis, wherein the first lobes are configured to cooperate with the second lobes to facilitate a pumping action of the build material. The extrusion printing system 1 further comprises a feed channel 11 in fluid communication with the inflow portion 5 of each of the plurality of gear pump units 3, wherein the feed channel 11 is configured to feed build material to each of the plurality of gear pump units 3. The extrusion printing system 1 is configured such that, during operation thereof, the gear pump units 3 are configured to induce movement to the build material within the feed channel 11.

The gear pump units 3 are arranged next to each other and are connected to a common feed channel 11.

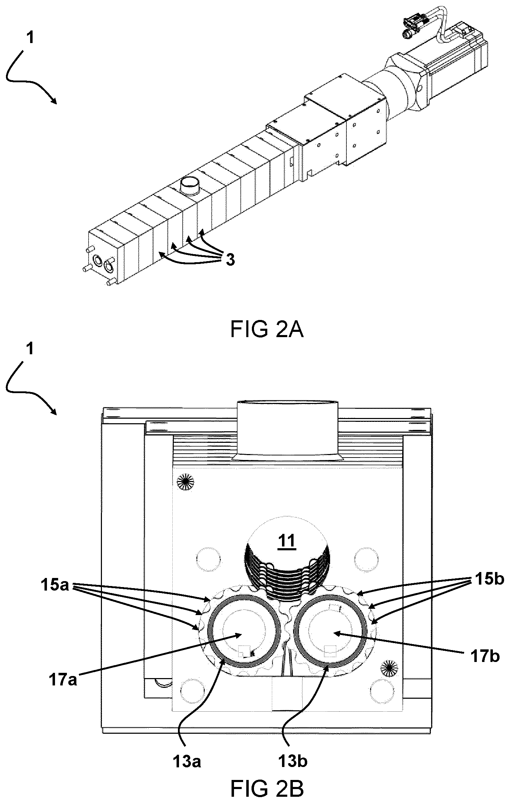

Fig. 2a, 2b show a schematic diagram of respectively a perspective view and a cross-sectional view of an exemplary embodiment of an extrusion printing system 1. As shown in fig. 2b, the gear pump units 3 are operationally connected next to each other. Each gear pump unit 3 comprises a first gear element 13a having a plurality of first lobes 15a disposed circumferentially around a first central axis 17a, and a second gear element 13b having a plurality of second lobes 15b disposed circumferentially around a second central axis 17b, wherein the first lobes 15a are configured to cooperate with the second lobes 15b to facilitate a pumping action of the build material.

The extrusion printing system 1 is configured such that, during operation, the gear pump units 3 apply shear forces to the build material in the feed channel 11. In this example, the gear pump units 3 are configured to apply the shear forces by means of movement of at least one of the first lobes 15a or second lobes 17b.

In this example, the first lobes 15a or second lobes 15b are configured interact with build material in the feed channel 11 at some point(s) during operation. In some examples, during the rotation of the first and second gear elements 13a, 13b, at least a portion of one or more lobes of the gear pump units extends into the feed channel.

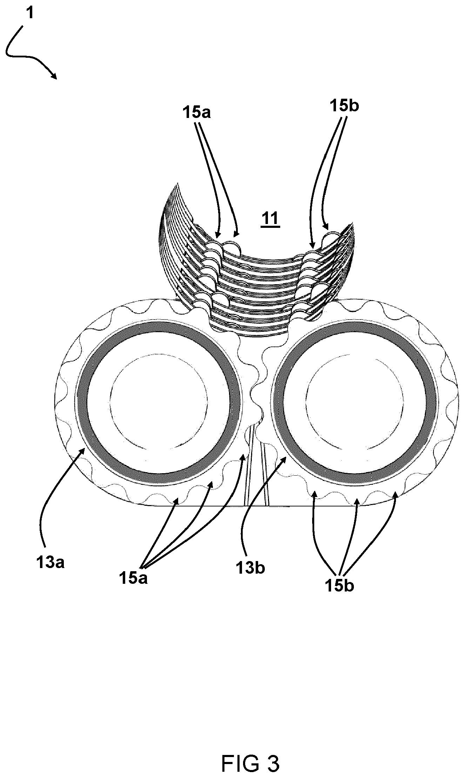

Fig. 3 shows a schematic diagram of a cross-sectional view of a part of an embodiment of an extrusion printing system 1. The first lobes 15a and the second lobes 15b are specially designed to have interactions with the build material present in the feed channel 11. At certain times during the operation of the system 1, these lobes 15a, 15b come into contact or interact with the build material within this channel.

To further detail the operation, when the first and second gear elements 13a and 13b, undergo rotation, there's a particular point where parts of the lobes 15a, 15b, either from the first or second set, protrude or extend into the aforementioned feed channel 11. In other words, as these gear elements turn, one or more lobes from the gear pump units momentarily reach into the feed channel 11, enabling them to facilitate the movement or pumping action of the build material within the system 1.

In this example, the feed channel is arranged transverse to an inflow direction of the gear pump units. However, other arrangements are also envisaged.

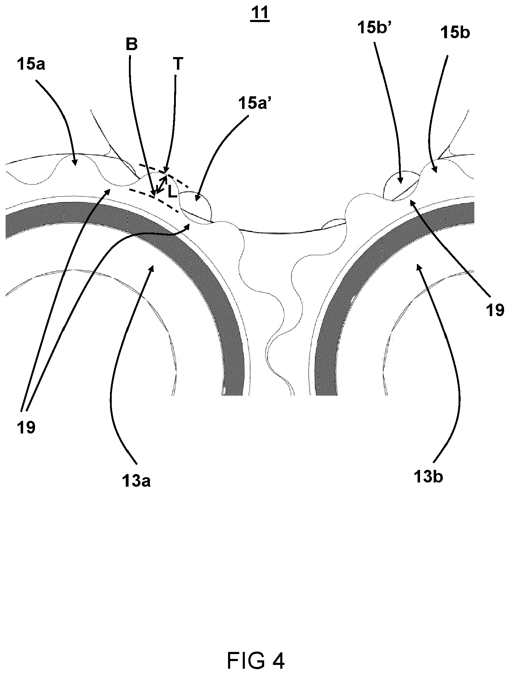

Fig. 4 shows a schematic diagram of a cross-sectional view of exemplary lobes of gear pump units 3. The first gear element 13a features multiple projections or extensions termed as the first lobes 15a. These lobes are strategically arranged in a circle around a central point, referred to as the first central axis 17a. Similarly, there's a second gear element 13b that also has its set of projections or extensions, known as the second lobes 15b. These second lobes 15b are similarly arranged in a circular pattern around their unique central point, called the second central axis (17b). The interaction between these two sets of lobes 15a, 15b per gear pump unit 3 provides for a pumping action. The first lobes 15a are specifically designed to work in tandem with the second lobes 15b. When these two sets of lobes come into close proximity with each other (or alternatively in contact/engagement), they produce a pumping action. This action provides for the movement or extrusion of the build material through the system 1. The combined actions and interactions of these lobes facilitate the effective pumping and flow of the build material in the extrusion printing system 1.

In this example, there is no direct contact between the first lobes 15a and the second lobes 15b. A relatively small gap distance is maintained at the closest proximity therebetween.

In fig. 4, also lobes 15a', 15b' of a neighboring gear pump unit is shown. In some alternative examples, the movement of lobes of neighboring gear pump units are aligned or synchronized. This can affect the interaction and the movement induced to the build material in the feed channel 11.

In this example, the gear pump units 3 are arranged such that troughs 19 between individual lobes do not enter the feed channel throughout the rotation of the first and second gear elements 13a, 13b during the pumping action.

In this example, an extent to which the lobes extend into the feed channel is more than 40 percent of a total length L of an individual lobe measured from its base B to its tip T.

The lobes of the gear pump units 3 can be effectively used for achieving shear thinning in the feed channel.

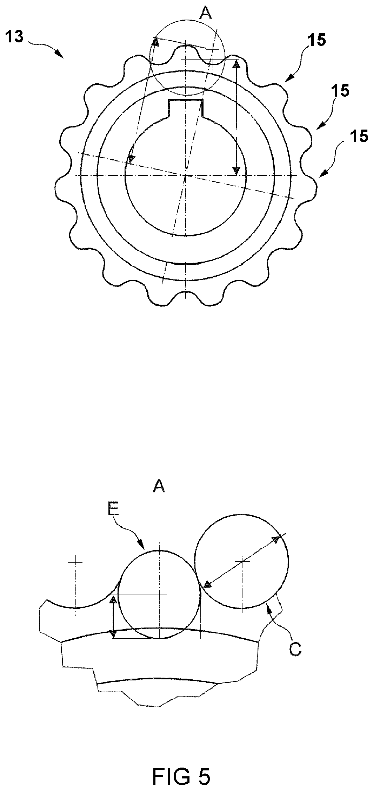

Fig. 5 shows a schematic diagram of a cross-sectional view of exemplary gear element 13 with a plurality of lobes 15. In this example, the gear element 13 includes a relatively large number of lobes, namely fifteen lobes. It is found that for more than 6 lobes, preferably more than 7 lobes, even more preferably more than 10 lobes, the interaction of the lobes with the build material in the feed channel 11 can be improved, at least for some examples.

In the shown example, each lobe features an ellipsoid design, wherein an ellipsoid portion E of each lobe is complemented with a circular portion C defining the valleys between adjacent lobes/mountains. Such design characteristic enables to better maintain a minimum distance between lobes of the first and second gear elements 13a, 13b when they are in close proximity to each other. This can have significant benefits for the operation of the gear pump units.

It will be appreciated that the exemplary dimensions are not restrictive for the claimed invention. They are merely provided as an example.

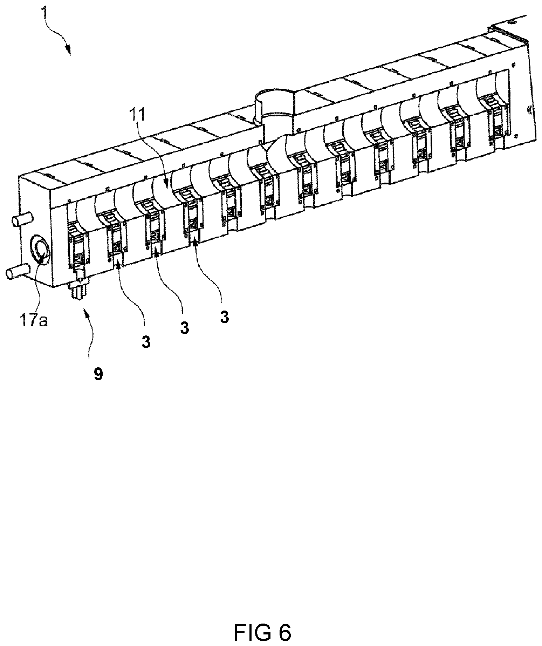

Fig. 6 shows a schematic diagram of a cross-sectional perspective view of an embodiment of an extrusion printing system 1. The system provides for a gear pump array with a feed channel system. The gear pump units are arranged/positioned sequentially. In this example, the feed channel, which is positioned perpendicular to the gear pump's inflow, ensures a steady and consistent delivery of the paste material across the different gear pump units. The system also integrates one or more nozzles that directly connect to each of these gear pump units.

In this example, the lobes jut out into the paste material's feed/supply channel 11. This design ensures better flow dynamics, especially considering the viscous nature of the paste materials. The shear can be generated directly in the feed channel 11. This shear action reduces the paste material's viscosity, making it flow more effortlessly into the gear pump's housing. In conventional designs, the supply system needed significant pressure to feed the paste material. However, this can be avoided according to the system of the disclosure. A relatively broad channel is provided to transport the paste material to various gear pump units 3 that connect to nozzles 9. A significant advantage is provided by the movement of the gear pump units' lobes within this channel, drastically reducing the required pressure. This low-pressure system offers numerous benefits: It facilitates the alignment of more gear pump units 3 in a series, using the same paste material supply channel. Hence, a larger number of gear pump units 3 may be used, enabling an improved parallel printing. Further, with reduced pressure, there's a decreased chance of phase separation, which occurs when moisture and solid particles segregate due to high pressure. Also, overall system efficiency is improved, making it more energy-conservative.

The build material (e.g. paste material) inherently has a specific viscosity. However, by enhancing its movement within the supply channel, its viscosity decreases. The once relatively viscous paste can become more fluid (cf. lower viscosity) when set in motion. The interaction between the paste and the moving gears also influences its flow dynamics, ensuring a smoother transition through the gear pump blocks.

The feed channel 11 can be arranged to cater to multiple gear pump units 3. The gears, designed to extend into the feed channel 11, facilitate the even distribution of the build material. As the build material is introduced from above into the feed channel 11, it gets distributed across various gear pump units 3, all in fluid communication with the feed channel 11. This distribution is facilitated by the pressure exerted on the paste material, which then gets swiftly engaged by the rotating gears.

Therefore, the extension of the lobes of the gear pump units 3 into the build material feed/supply channel has significant impact on the performance of the system. It promotes efficient distribution, pressure management, and improved flow dynamics, making the entire system more efficient.

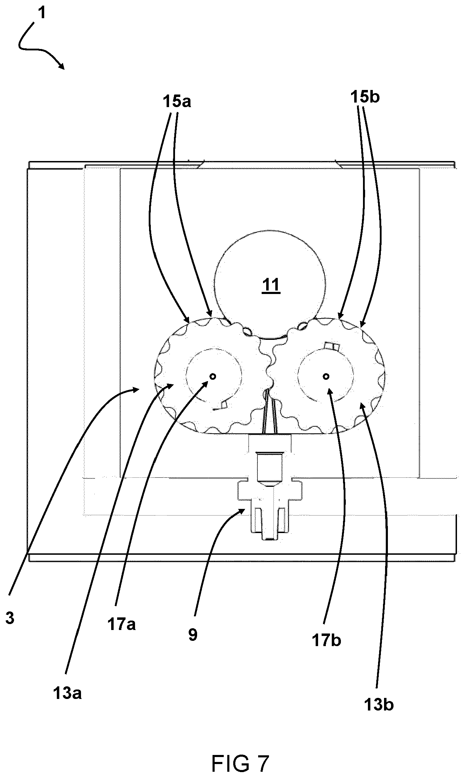

Fig. 7 shows a schematic diagram of a cross-sectional view of an embodiment of an extrusion printing system 1 showing a cross sectional view of an exemplary nozzle 9. A part of the upper portions of the lobes enters the cross sectional area of the feed channel 11.

The design is such that the lower portion of a lobe, or the depression/valley situated between two lobes, doesn't enter the feed channel 11. If the lobes were to protrude more, they wouldn't capture or move additional material. Consequently, any further extension would be redundant and could even be counterproductive. An over-extended lobe would only obstruct the feeding channel, potentially impeding the smooth flow of the paste material. Allowing the lobes to intrude slightly into the feed channel 11 has a significant benefit. It induces movement in the build material, facilitating a more consistent flow. The lobes may be deliberately configured or designed to agitate or stir and/or mobilize the build material within the feed channel 11.

It will be appreciated that the design of the lobes can be important for the performance of the system. If they were more peak-like or toothy, the extrusion may not be as uniform. Thus, the lobes' design ensures that the paste material's extrusion through the nozzles 9 is more even and consistent.

In some examples, the system is configured to ensure a minimal overlap of the lobes into the feeding channel, especially when the channel's diameter greatly surpasses the lobe sections that extend into it. The paste channel is constructed with a specific aperture to maintain an ample opening from the central feeding channel 11. In some examples, the diameter of the supply/feed channel 11 and the circles around which the gears rotate are roughly of equal size. However, other configurations are also envisaged.

The supply duct, or feed channel 11, needs to be broad enough to serve multiple gear pump units 3 connected to it. Its relatively large size is intentional, aiming to minimize pressure drops when the series of gear pump units draw in the viscous build material.

It will be appreciated that there may be an intricate balance between the design of the lobes and the feeding channel 11, in order to ensure efficient movement and extrusion of build materials through the system 1. Various adjustments and configurations are possible.

In this example, the nozzle is detachably connected to the gear element unit 3. In this way, the nozzles 9 can be suitable selected based on i.a. the build material that is used and/or the desired extrusion characteristics. However, it is also envisaged to use non-detachable nozzles 9 that are for example integrated with the gear pump units 3. It is possible to use more than one nozzle per gear pump unit. In some examples, a pair of two nozzles are used per gear pump unit. However, the use of a different number of nozzles is also possible.

The nozzle 9 can be affixed using threading. This feature offers a practical advantage; if a nozzle 9 becomes clogged15a or obstructed, it can be easily detached and addressed. The threading is designed at the bottom, allowing nozzles 9 to be easily screwed on or off, indicating the presence of detachable nozzles. Other embodiments are also possible. Thus, the nozzles 9 can be disconnected or "uncoupled" from the gear pump units, offering flexibility in maintenance and operation.

While a single threaded hole is a common configuration, the design allows for two threaded holes, facilitating the attachment of two nozzles to each gear pump. The positioning of these nozzles is versatile. They can be for example centered right beneath the gear mechanisms, but various other configurations are possible. The exemplary dual-nozzle setup can effectively double the output, providing improved parallel printing efficiency.

Multiple gear pump units 3 are sequentially arranged, all supplied by a central feeding channel 11 dedicated to the paste material. These gear pump units 3 may be directly connected to the nozzles 9. Gear pump units 3 can be designed to consistently dispense the build material, maintaining a uniform volumetric flow. However, the properties of the build material can introduce challenges. For example, if the paste has irregularities or inhomogeneities, there's a risk that a nozzle 9 may get obstructed. In situations where one nozzle connected to a gear pump unit gets blocked, it may compromise the performance of its companion nozzle on the same gear pump. In some examples, in order to ensure consistent flow to multiple nozzles, the gear pump units are configured to delay the separation of channels. This can for instance be done by means of a buffer chamber right before the paste material diverges into separate nozzles.

It will be appreciated that, in the context of the present disclosure, the term "build material" is to be broadly understood as any material that can be extruded and is suitable for use in the described extrusion printing system. The specific properties, such as viscosity, flow rate, melting temperature, and others, of the build material may vary and can be selected based on the specific application or desired end product.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean `at least one', and do not exclude a plurality. The term "and/or" includes any and all combinations of one or more of the associated listed items. The mere fact that certain measures are recited in mutually different claims does not indicate that a combination of these measures cannot be used to an advantage.

## Claims

1. An extrusion printing system configured to extrude a build material, wherein the system includes:
a plurality of gear pump units arranged consecutively, wherein each gear pump unit has an inflow portion for receiving build material and an outflow portion for transferring build material towards at least one nozzle, wherein each gear pump unit comprises a first gear element having a plurality of first lobes disposed circumferentially around a first central axis, and a second gear element having a plurality of second lobes disposed circumferentially around a second central axis, wherein the first lobes are configured to cooperate with the second lobes to facilitate a pumping action of the build material;
a feed channel in fluid communication with the inflow portion of each of the plurality of gear pump units, wherein the feed channel is configured to feed build material to each of the plurality of gear pump units; and
wherein, during operation, the gear pump units are configured to induce movement to the build material within the feed channel.

2. The extrusion printing system according to claim 1, wherein, during operation, the gear pump units are configured to apply shear forces to the build material in the feed channel.

3. The extrusion printing system according to claim 2, wherein the gear pump units are configured to apply the shear forces by means of movement of at least one of the first lobes or second lobes.

4. The extrusion printing system according to any one of the preceding claims, wherein at least one of the first lobes or second lobes are configured interact with build material in the feed channel.

5. The extrusion printing system according to any one of the preceding claims, wherein during the rotation of the first and second gear elements, at least a portion of one or more lobes of the gear pump units extends into the feed channel.

6. The extrusion printing system according to claim 5, wherein the gear pump units are arranged such that troughs between individual lobes do not enter the feed channel throughout the rotation of the first and second gear elements during the pumping action.

7. The extrusion printing system according to any one of the preceding claims, wherein lobes of the gear pump units are used for achieving shear thinning in the feed channel.

8. The extrusion printing system according to any one of the preceding claims, wherein the feed channel is arranged transverse to an inflow direction of the gear pump units.

9. The extrusion printing system according to any one of the preceding claims 5-8, wherein an extent to which the lobes extend into the feed channel is at least 2 percent of a total length of an individual lobe measured from its base to its tip, preferably at least 20 percent, more preferably at least 50 percent.

10. The extrusion printing system according to any one of the preceding claims 5-9,
wherein a part of a surface of each lobe that extends into the feed channel during operation is processed or treated with specific texturing or coating techniques so as to improve its shear thinning properties during operation.

11. The extrusion printing system according to any one of the preceding claims 5-10, wherein an extent to which the lobes extend into the feed channel is adjustable by change or replacement of the lobes.

12. The extrusion printing system according to any one of the preceding claims 11, wherein the extent to which the lobes extend into the feed channel is selected in a range of 2 percent to 80 percent of the length of a lobe at least partially based one or more values indicative of viscosity and/or flow rate of the build material in the feed channel.

13. The extrusion printing system according to any one of the preceding claims, wherein each of the first and second lobes features an ellipsoid design, wherein an ellipsoid portion of each lobe is complemented with a circular portion defining the valleys between adjacent lobes.

14. The extrusion printing system according to any one of the preceding claims, wherein the first and second gear elements comprise at least 6 lobes, preferably at least 7 lobes, even more preferably at least 10 lobes.

15. A method for extrusion printing using a system configured to extrude a build material, the method comprising the steps of:
providing a plurality of gear pump units arranged consecutively, wherein each gear pump unit has an inflow portion for receiving build material and an outflow portion for transferring build material towards at least one nozzle, wherein each gear pump unit comprises a first gear element having a plurality of first lobes disposed circumferentially around a first central axis, and a second gear element having a plurality of second lobes disposed circumferentially around a second central axis, wherein the first lobes are configured to cooperate with the second lobes to facilitate a pumping action of the build material;
providing a feed channel in fluid communication with the inflow portion of each of the plurality of gear pump units, wherein the feed channel is configured to feed build material to each of the plurality of gear pump units; and
extruding the build material through the at least one nozzle connected to each gear pump unit; and
wherein the gear pump units are employed to induce movement to the build material within the feed channel.
